# EUROPEAN PATENT SPECIFICATION

(11) **EP 3 370 562 B1**
(45) Date of publication and mention of the grant of the patent: **19.02.2020**
(21) Application number: 16823040.7
(22) Date of filing: 07.11.2016
(51) Int. Cl.: A44C 13/00, A44C 11/00, A44C 5/10, F16G 13/12

(54) **ELEMENT FOR A MODULAR JEWEL, AS WELL AS A MODULAR JEWEL COMPRISING SUCH ELEMENT**
ELEMENT FÜR EIN MODULARES SCHMUCKSTÜCK SOWIE MODULARES SCHMUCKSTÜCK MIT SOLCH EINEM ELEMENT
ÉLÉMENT POUR BIJOU MODULAIRE ET BIJOU MODULAIRE COMPRENANT UN TEL ÉLÉMENT

(30) Priority: 06.11.2015 IT UB20086575 U
(43) Date of publication of application: 12.09.2018
(73) Proprietor: G01.com S.r.l., 31036 Istrana (Treviso) (IT)
(72) Inventor: GASPARINI, Leonardo, 31036 Istrana (Treviso) (IT)
(74) Representative: Feltrinelli, Secondo Andrea
(86) International application number: PCT/IB2016/056692
(87) International publication number: WO 2017/077518

(56) References cited:
- WO-A1-93/14665
- WO-A1-94/12807
- WO-A1-96/28988
- DE-U1-202011 000 079
- FR-A- 1 463 606
- GB-A- 241 414
- US-A- 4 951 361

## Description

### TECHNICAL FIELD OF INVENTION

The present invention relates to an element for a modular jewel and, more specifically, a linking element for a modular jewel of the reconfigurable type.

### STATE OF THE ART

Generally, jewellery such as necklaces, bracelets, earrings or the like, may include a plurality of linking elements made and/or decorated with metals and/or stones and/or precious materials in order to impart quality and value to the jewel itself.

With particular reference to jewelry such as necklaces or bracelets, the individual linking elements may have substantially annular configurations and may be reciprocally and permanently connected.

Preferably, the linking elements are produced as single, continuous bodies, bent back onto themselves and free of openings, in order to impart a pleasant aesthetic appearance to the jewel in addition to ensuring sufficient mechanical strength to the chain that composes the jewel itself.

Due to the permanent connection between the individual linking elements, such jewellery may not be reconfigured unless through a rework of them that requires at least cutting and welding operations of some among the linking elements. It is evident that such processes are not in the normal capacity of an user who, therefore, cannot autonomously reconfigure a similar jewel.

With the aim of providing a jewel with the possibility to be easily reconfigured, even by an end user, modular jewellery have been produced, such as a necklace, a bracelet or similar, comprising a plurality of linking elements provided with means for reciprocal connection, suitable to facilitate the engagement or reciprocal and selective disengagement, between the individual linking elements. By way of an example, modular jewellery comprising linking elements, substantially annular, which have a fixed portion and a movable portion reciprocally hinged and operatively attached to elastic means acting to maintain the movable portion in abutment against the fixed portion, is well known. Generally, the elastic means can be a spring or similar element suitable for the purpose.

To reciprocally connect two linking elements so configured, it is sufficient to act upon the movable portion of a linking element first, by applying on the same, a force opposite to the contrast force determined by the elastic means. In this way, it determines the actuation of the movable portion away from the fixed portion which, in turn, determines the opening of an access passage through which the second linking element is introduced. Next, the movable portion of the first linking element is released which, due to the contrasting force exerted by the elastic means, is brought into abutment against the fixed portion, occluding the access passage previously obtained and reciprocally engaging the first and second linking elements.

Proceeding in a similar way, more linking elements may be connected to each other until obtaining the desired configuration of the modular jewel.

Although such modular jewel can be easily configured by an end user, however, it has a complex structure as it is necessary to provide, for each linking element, at least one fixed portion and one respective movable portion connected to each other according to a rotating way, as well as elastic means operatively associated to both such portions.

In fact, a modular jewel so configured has a complex and aesthetically unpleasant structure. Document FR1463606 discloses a key ring according to the preamble of claim 1.

In the field there is the need for a modular jewel of the reconfigurable type according to a solution simple to implement and use.

### OBJECT OF THE INVENTION

The main object, therefore, of the present invention, is to improve the state of technology relating to a modular jewel of the reconfigurable type.

Within this aim, an object of the present invention to provide a linking element for modular jewellery_configured to_facilitate_the connection/separation thereof to/from a further linking element for a modular jewel according to a solution functional and easy to use.

Another object of the present invention is that of providing a linking element for a modular jewel which has a simple structure comprising an extremely reduced number of components.

A further object of the present invention is that of providing a linking element for modular jewel which is maintenance-free and durable over time.

According to one aspect of the present invention a linking element for a modular jewel is provided according to claim 1.

According to a further aspect of the present invention, modular jewellery comprises a plurality of such linking elements according to claim 10 is object of the present invention.

The dependent claims refer to preferred and advantageous embodiments of the invention.

### BRIEF DESCRIPTION OF THE DRAWINGS

Further characteristics and advantages of the present invention will become more apparent from the detailed description of a preferred, non-exclusive, embodiment of a linking element for a modular jewel illustrated by way of an non limitative example in the accompanying drawings, wherein:
figure 1 is a front view of a linking element for a modular jewel, in a first operating configuration;
figure 2 is a front view of a linking element for a modular jewel, referred to in figure 1, in a second operating configuration;
figure 3 is a front view of a modular jewel comprising a plurality of linking items;
figure 4 is a view of a further version of a linking element for a modular jewel;
figure 5 is a view of a further version of a linking element for a modular jewel;
figures 6 and 7 are schematic views of a modular jewel obtained through a combination of linking items;
figures 8 to 10 are views of further versions of a linking element for a modular jewel according to the present invention;
figures 11 to 13 are views of other versions of a linking element for a modular jewel.

### EMBODIMENTS OF THE INVENTION

With reference to the attached figures, a linking element for a modular jewel is wholly indicated by the reference number 1.

As it will appear more clearly from the following description, the linking element 1, according to the present invention, is intended for use in jewellery articles and/or costume jewellery, without any limitation.

It is intended that the linking element 1 can however be used as a decorative element for clothing or for furnishing or as a decorative element in general without departing from the scope of the present invention.

With reference to the sector of jewellery or of costume jewellery in general, the linking element 1 can be used for the production of products such as a necklace, a bracelet, a pendant or in general, for the production of a precious or non-precious article.

In accordance with a preferred embodiment, the linking element 1, according to the present invention, can be used to produce a product configured as a chain.

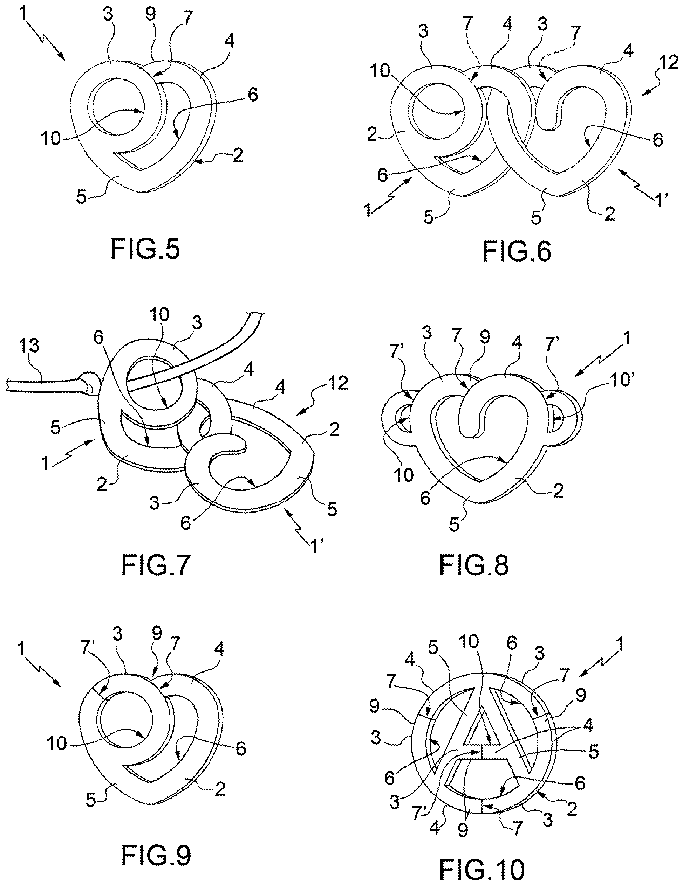

In the attached figures 8 and 9, the linking element 1 is illustrated, by way of example but not of limitation, as an annular element substantially with a heart shape although it is intended that the same may be an annular element configured substantially as a rectangle, a square, a circle, an ellipse, a star, a combination of these forms, any geometric shape or in any way in order to be able to depict or invoke any object, if desired, an animal, without limitation.

The linking element 1, according to the present invention, comprises a single and continuous body 2 presenting at least one first portion 3, at least one second portion 4 and at least one third portion 5.

The at least one third portion 5 may serve as a connecting element between the at least one first portion 3 and the at least one second portion 4.

As better described hereinafter, if the linking element 1 comprises a plurality of first portions 3 and of second portions 4, the same can be connected together via respective third connecting portions 5.

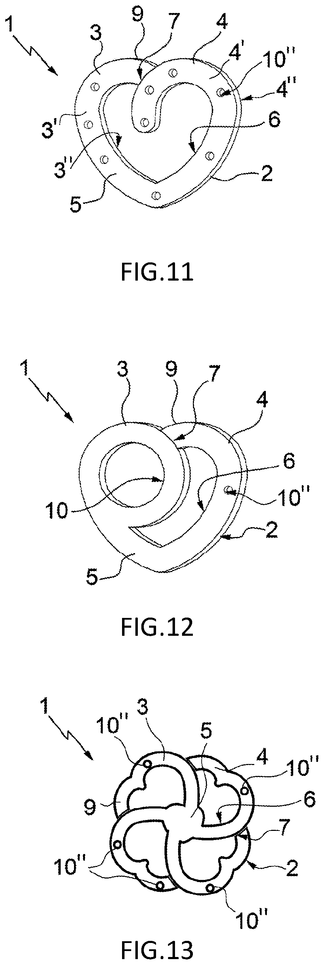

According to a further version, if the linking element 1 comprises a plurality of first portions 3 and of second portions 4, the same can therefore be reciprocally connected through at least one common portion of connecting 5 (see for example figure 13).

The body 2 is configured in such a way that at least one portion of the at least one first portion 3 is in close proximity with at least one portion of the at least one second portion 4 in a manner which will be disclosed hereinafter.

The at least one first portion 3, the at least one second portion 4 and the at least one third portion 5 delimit between them at least one first through-opening 6 through the body 2.

The linking element 1 according to the present invention, comprises at least one split 7.

More specifically, the at least one split 7 separates the at least one first portion 3 and the at least one second portion 4 in correspondence with the section of the body 2 wherein the portions are in close reciprocal proximity.

According to one version of the present invention, the at least one split 7 can have a linear or curvilinear trend, as desired.

According to a further version of the present invention, the at least one split 7 can have a jagged trend such as saw-toothed or similar, or any other profile without any limitation.

In particular, it is observed that the at least one split 7 is configured to selectively intercept at least one first through-opening 6.

The at least one split 7, in fact, can be selectively enlarged/restricted by means of an elastic deformation of at least one of the at least one first portion 3, the at least one second portion 4 or the at least one third portion 5, in order to limit/obstruct an access passage 8 to the through-opening 6.

Specifically, at least one of the at least one first portion 3 and/or the at least one second portion 4 and/or the at least one third portion 5 is made of a material of mainly elastic behaviour in order to allow the elastic deformation of the body 2 between a first operating configuration of the linking element 1, in which the access passage 8 is occluded, and a second operating configuration of the linking element 1, in which the passage 8 is open and allows access to at least one through-opening 6.

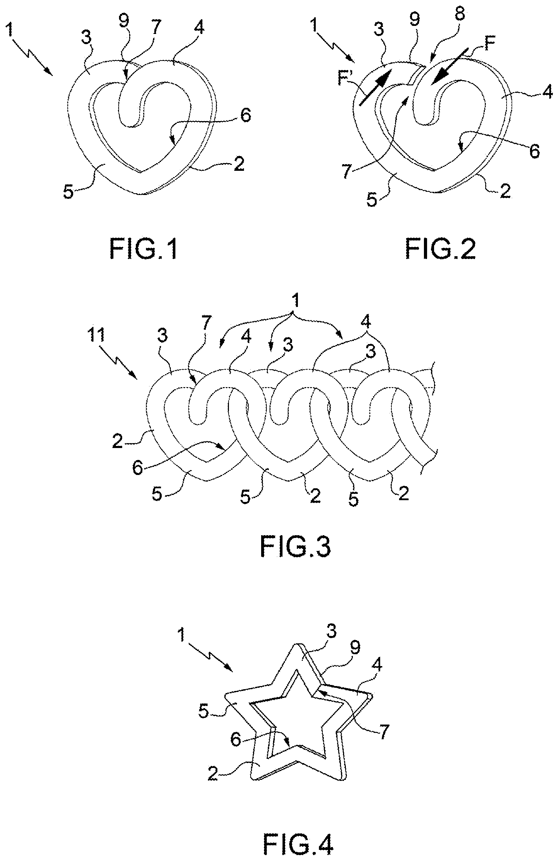

With the linking element 1 placed in the second operating configuration (figure 2), at least one section of the at least one first portion 3 is away from a respective portion of the at least one second portion 4. Specifically, with a first linking element 1 placed in the second operating configuration, it is possible to introduce or remove a second linking element 1 in or from the through-opening 6 of the first linking element 1, connecting or separating them reciprocally.

When the linking element 1 is placed in the first operative configuration (figures 1 and 3 to 10), instead, the access passage 8 is occluded.

With the linking element 1 placed in the first operating configuration, the at least one first portion 3 and the at least one second portion 4 are placed in reciprocal abutment, in proximity to the body portion 2 along which the at least one split 7 is achieved.

As stated, at least one among the at least one first portion 3 and/or the at least one second portion 4 and/or the at least one third portion 5 can be produced from a material with a mainly elastic behaviour.

The expression "material with a mainly elastic behaviour" means a material that in the normally expected use conditions for the linking element 1 shows an elastic behaviour, thus being deformable elastically and not plastically.

More in detail, by applying a couple of external forces F, F' to the linking element 1 placed in the first operating configuration, or rest configuration, and more precisely by applying a first force F to the at least one first portion 3 and a second force F' to the at least one second portion 4, wherein the first force F and the second force F' have substantially the same intensity and are reciprocally opposed, an elastic deformation of the same can be determined, until it is caused to assume a second operating configuration or deformed configuration. The instant in which this couple of forces F, F' is no longer applied, the linking element 1 again assumes the first operating configuration, through one of its purely elastic return.

By way of example but not of limitation, the body 2 can be made from a material such as a metal, a precious metal, a metal alloy, a plastic material with an elastic behaviour, wood or any valuable material which has an elastic behaviour (purely elastic behaviour) within the predefined values of the applicable force to the linking element 1 during use.

The expression "field of use" is intended to indicate the predefined force values of the F, F', applicable to the linking element 1 during use, in order to enable a deformation and an return completely elastic for the linking element 1 itself between the first operating configuration and the second operating configuration, and vice versa.

At least one between the at least one first portion 3 and the at least one second portion 4 has at least one first end 9 with a complementary shape to the profile of the other between the at least one second portion 4 or the at least one first portion 3 on which the said first end 9 protrudes.

With reference to the embodiment illustrated in figure 1, the at least one first portion 3 may have a first end 9 complementary to a portion of the at least one second portion 4.

The conformation of the first end 9 determines the conformation of the at least one split 7, with particular reference to the amplitude of the latter.

According to one aspect of the present invention, the at least one split 7 has an extremely reduced amplitude.

With reference to the at least one split 7, the term amplitude is intended to indicate the separation distance between the at least one first portion 3 and the at least one second portion 4 along the extension of the at least one split 7 itself.

According to a preferred version of the present invention, the at least one split 7 is obtained by the laser cutting of at least one portion of separation between the at least one first portion 3 and the at least one second portion 4.

According to a further version of the present invention, the at least one split 7 can be produced by means of a water jet cutting process, molding, shearing or melting, without any limitation to the purposes of the present invention.

The at least one split 7 can have a width the value of which is between 0.01 mm and a value equal to or less than the thickness of the body 2 of the linking element 1.

By way of example but not of limitation, in the case the body 2 of the linking element 1 presents a thickness of about 2mm, the aforesaid amplitude of the at least one split 7 can vary in a value between 0.01 mm and about 2mm.

The body 2 may have a substantially laminar conformation. In practice, the body 2 can have a reduced thickness relative to its own planned expansion.

The at least one first portion 3 has a first clamping surface 3' and a second gripping surface 3", opposed to each other, designed to promote a better grip of the linking element 1 in the manner that will be better described hereinafter.

The first and the second gripping surfaces 3', 3" are reciprocally separated with a distance equal to the thickness of the body 2.

Similarly, the at least one second portion 4 has a respective first gripping surface 4' and a respective second gripping surface 4" separated from each other (see figure 11).

The respective first and second gripping surface 4', 4" are reciprocally separated with a distance equal to the thickness of the body 2.

In this regard, according to one version of the present invention, the body 2 can be formed by the cutting of a metal sheet (for example by punching, laser cutting, etc.).

According to a further version of the present invention, the body 2 can be made by coining.

In the case the body 2 is substantially laminar, it follows that the at least one first portion 3 belongs to the same lying plane of the at least one second portion 4 and/or of said at least one third portion 5.

In the moment in which a couple of external forces F, F', in accordance with the procedures previously described, is applied to the at least one first portion 3 and the at least one second portion 4, at least one between the at least one first portion 3 and the at least one second portion 4 is moved away from the common lying plane in which such portions 3, 4 lie on, with the linking element 1 placed in the first operating configuration.

In fact, the temporary deformation of the linking element 1 between the first and the second operating configurations is promoted by accessibility to both of the gripping surfaces 3', 3"; 4', 4" respectively of the first portion 3 and second portion 4, in favour of an easier use of the linking element 1 itself.

More in detail, the grab of the at least one first portion 3 and of the at least one second portion 3 and 4 is promoted by the fact that the linking element 1 has a laminar or substantially laminar configuration and, therefore, each between the at least one first portion 3 and the at least one second portion 4 can be firmly grasped from both the respective first and second grip surfaces 3', 3"; 4', 4".

According to a further version of the present invention, the linking element 1 can be produced from a bent or bowed metal sheet or bent in the function of specific requirements of use. In this case, the at least one first portion 3, the at least one second portion 4 and/or the at least one third portion 5 may belong to the same curved surface.

Additional configurations of a linking element 1 are possible however with respect to that described above.

According to one version of the present invention, the body 2 can be at least partially coated by at least one precious metal and/or by at least one precious stone.

According to a further version of the present invention, the linking element 1 may have at least one further through-opening 10 (see figures 8-10).

The at least one further through-opening 10 is distinct and separate from the at least one through-opening 6.

The at least one further through-opening 10 may be delimited by at least one between the at least one first portion 3 and/or the at least one second portion 4 and/or the at least one third portion 5.

By way of example but not of limitation, figure 5 illustrates a linking element 1 comprising at least one further through-opening 10 delimited by the at least one first portion 3.

This version differs from that described previously in respect of the presence of the said at least one further through-opening 10 and allows to obtain the same technical advantages.

The at least one further through-opening 10 can act as a seat engageable by a lace or by a chain or by a similar element, along which at least one linking element 1 according to the present invention is inserted.

According to a further version of the present invention, the linking element 1 may have at least one split 7 and at least one further split 7' (figures 8 and 9).

With reference to the embodiment illustrated in figure 9, substantially corresponding to the embodiment illustrated in figure 5 with the exception of the presence of at least one further split 7', the at least one further split 7' may be provided to allow access to at least one further through-opening 10 through the body 2. The at least one further through-opening 10 is distinct and separate from the at least one through-opening 6.

By way of example, the at least one further split 7' can be obtained by the cutting, respectively, of at least one portion of the at least one first portion 3 and/or of at least one section of the at least one second portion 4.

According to a further version of the present invention, the linking element 1 may have at least one through-opening 6, at least one first further through-opening 10 and at least one second further through-opening 10' separated from each other (figure 8).

According to another version of the present invention, the body 2 can have three through-openings 6, separated from each other, each bounded by a respective at least one first portion 3 and/or at least one second portion 4 and/or at least one third portion 5 and equipped with a respective split 7 each to be placed selectively in communication with the outside of the body 2 according to the previously described modality (see figure 10).

Further, according to this version, the body 2 can have at least one further through-opening 10 separated from the remaining through-openings 6. At the at least one further through-opening 10, the body 2 can have a further split 7' adapted to put the at least one further through-opening 10 selectively in communication with at least one of the remaining through-openings 6, according to the modality described with reference to previous versions.

According to one aspect of the present invention, preferably, the number of splits 7, 7' being along the body 2 can be substantially equal to the number of through-openings 6, 10, 10' and in any case such to ensure a continuity of the body 2 itself as well as the union of the at least one first portion 3 to the at least one respective second portion 4 by means of an elastic connection.

More generally, it is observed that the number of splits 7, 7' present in the linking element 1 can vary according to the shape of the linking element 1 itself. According to a further version, the linking element 1 may have at least one hole 10" provided extending through at least one portion of the body 2.

Specifically, the at least one hole 10" is made passing through at least one of the at least one first portion 3 and/or the at least one second portion 4 and/or the at least one central portion 5 according to specific needs or preferences (see figures 11 to 13).

The at least one hole 10" is provided so as a wire or similar element or at least one annular or substantially annular element, not illustrated in the attached figures, can be inserted herein, in such a way that such annular element provides a connection point for a further linking element 1.

According to one aspect of the present invention, the annular element may be configured as a linking element 1 with reduced size and adapted to be insertable through the at least one hole 10".

The total number of holes 10" determines in the linking element 1 the number of possible connection points for further linking elements 1.

It is noted that, according to a further aspect, the at least one hole 10" contributes to lightening the linking element 1. Furthermore, in the linking element 1 the at least one hole 10" may be provided with specific positioning so as to impart a particular aesthetic and distinctive appearance to the linking element 1, when it is not used for the connection with a further linking element 1.

It is apparent, therefore, that the at least one linking element 1 can fulfil the function of a pendant in addition to that of the link of a chain of a necklace or a bracelet, etc.

A modular jewel made through the use of at least one linking element 1 form also an objective of the present invention.

In figure 3, a modular jewel configured as a chain, wholly indicated with 11, comprising at least two linking elements 1 reciprocally engaged is illustrated.

As stated, the reciprocal connection between the individual linking elements 1 is stable and resistant, in order to impart the necessary mechanical strength to the jewel itself and prevent breakage or accidental disengagement of its links that could, in turn, cause the slipping of the modular jewel and the possible loss thereof.

The modular jewel 11 shown in figure 3 comprises a plurality of linking elements 1 that have the same configuration. There are further versions of the modular jewel 11 wherein the individual linking elements 1 differ from each other, without any limitation.

In this regard, in figure 6 the modular jewel 12 is shown further comprising at least one first linking element 1 and at least one second linking element 1' different from each other. Specifically, at least one of the at least one first linking element 1 and/or the at least one second linking element 1' may have at least one further through-opening 10.

With reference to the version shown in figure 5, it is highlighted that the split 7 is represented with a dotted line since the same may possibly be present or not in at least one of the at least one first linking element 1 or the at least one second linking element 1'.

The further modular jewel 12 may be attached as a pendant to a flexible element 13 as a band or chain or a wire or similar as a bracelet, a lace, etc.

The person skilled in the art will be able to understand how a modular jewel according to the present invention can be composed by linking elements 1 shaped in the same or different manner from each other without any limitation. If desired, the linking element 1 may act as a support for a pendant or a similar element on the market without any limitation to the scope of the present invention.

A brief description of the assembly of a modular jewel comprising at least one first linking element 1 and at least one second linking element 1 similar to each other is disclosed in the following.

A first linking element 1 placed in the first operating configuration, i.e. with the access passage 8 to the at least one first through-opening 6 occluded (figure 1) is provided.

A couple of forces F, F' opposed to each other is applied respectively on the at least one first portion 3 and on at least one second portion 4, in order to spread them apart reciprocally, offsetting reciprocally (figure 2).

Due to the forces F, F' the first linking element 1 is deformed until it assumes the second operating configuration.

More precisely, the body 2 is deformed elastically, in the sense that this deformation is comprised within the purely elastic deformation range of the material/the materials from which the body 2 is made. In the second operating configuration, the end 9 of one between the at least one first portion 3 or the at least one second portion 4 is moved away from the other between the at least one second portion 4 and the at least one first portion 3, thereby enlarging the at least one split 7 and, in fact, opening the access passage 8 to the at least one first through-opening 6.

The forces F, F' can be applied along a direction normal to the body 2 or parallel to the same, without limitation.

With the first linking element 1 placed in the second operating configuration, it is possible to introduce a second linking element 1 inside the at least one first through-opening 6 through the access passage 8.

Subsequently, the at least one first portion 3 and the at least one second portion 4 are released, so that the first linking element 1, for effect of the intrinsic elasto-mechanical characteristics of the body 2, assumes again the first operating configuration, in fact determining a reciprocal approach between the at least one first portion 3 and the at least one second portion 4 until complete occlusion of the access passage 8 is delimited between the same.

With the first linking element 1 placed in the first operating configuration, the at least one first through-opening 6 is completely delimited within the body 2. The first and the second linking elements 1 are connected to each other in a firm and stable manner, such to prevent their accidental reciprocal separation. Where it is necessary to separate the first from the second linking element it is sufficient to proceed in the reverse manner to that previously described.

The skilled person in the art will easily understand that, by means of a linking element 1, 1' according to the present invention, it is possible to obtain a reconfigurable modular jewel according to an extremely easy and efficient manner.

In particular, such a modular jewel may comprise at least two linking elements 1,1' or a plurality of linking elements 1,1' configured equal to or different from each other, without any limitation. In this way, an end user can configure and/or reconfigure a modular jewel according to the present invention without any limitation, in order to adapt the modular jewel itself to their needs.

According to a further aspect of the present invention, the linking element 1,1' may be used as a connecting element or closure for instance in a shoe or in a garment.

For this purpose, a connecting element, according to the present invention, may comprise at least one first linking element 1 attached to a first portion of a shoe or a garment, and at least one second linking element 1 attached to a second portion of such shoe or garment which are desired to be reciprocally connected.

In fact, by mutually connecting the first linking element 1 with the second linking element 1, according to the manner described above, it is possible to reciprocally attach the first portion of a shoe or a garment respectively with the second portion of such shoe or garment. Since the at least one first linking element 1 and the at least one second linking element 1 can be reciprocally connected/separated, the aforesaid first and second portions of a shoe or of a garment can be reciprocally connected/separated in a simple and easy manner.

The linking element 1,1', as well as a modular jewel 11, 12 comprising at least such a linking element 1,1' described above may undergo to numerous modifications and variations within the scope of protection of the following claims.

## Claims

1. Linking element for a modular jewel, said linking element comprising a body (2) single and continuous that has at least one first portion (3), at least one second portion (4) and at least one third portion (5) for connecting said at least one first portion (3) and said at least one second portion (4), wherein at least one section of said at least one first portion (3) is placed in close proximity to at least one portion of said at least one second portion (4), said at least one first portion (3), said at least one second portion (4) and said at least one third portion (5) delimiting between them at least one first through-opening (6) through said body (2), said at least one first portion (3) and said at least one second portion (4) are separated from each other, at said portion where they are in close proximity to each other, by at least one split (7, 7') intercepting said at least one first through-opening (6), said at least one split (7, 7') being selectively expandable/shrinkable through an elastic deformation of at least one between said at least one first portion (3) and/or said at least one second portion (4) and/or said at least one third portion (5), to delimit/occlude an access passage (8) to said through-opening (6), said body (2) having a substantially laminar conformation so that said at least one first portion (3) has a first gripping surface (3') and a second gripping surface (3"), opposed to each other, and said at least one second portion (4) has a respective first gripping surface (4') and a respective second gripping surface (4") separated from each other with a distance equal to the thickness of said body (2), **characterised in that** said linking element comprises at least one further split (7') provided to allow access to at least one further through-opening (10) through said body (2).

2. Linking element for a modular jewel according to claim 1, wherein at least one of said at least one first portion (3) and/or said at least one second portion (4) and/or said at least one third portion (5) is made from an elastic material adapted to allow the elastic deformation of said linking element between a first operative configuration, wherein said at least one first portion (3) and said at least one second portion (4) are in close reciprocal proximity, occluding said access passage (8) and a second operating configuration in which said at least one first portion (3) and said at least one second portion (4) are moved away each other, delimiting between them said access passage (8).

3. Linking element for a modular jewel according to claim 2, wherein said material with elastic behaviour is or includes a metal and/or a metal alloy and/or an elastic plastic and/or wood.

4. Linking element for a modular jewel according to claim 1 or 2, wherein at least one of said at least one first portion (3) and said at least one second portion (4) has at least one first end (9) with a shape complementary to the profile of the other between said at least one second portion (4) or said at least one first portion (3) on which it protrudes, with said linking element provided in said first operating configuration.

5. Linking element for a modular jewel according to claim 1, wherein said at least one split (7) has a reduced size, between 0.01 mm and approximately the thickness of said body (2).

6. Linking element for a modular jewel according to any one of the preceding claims, wherein said at least one first portion (3) belongs to the same lying plane of said at least one second portion (4) and/or of said at least one third portion (5).

7. Linking element for a modular jewel according to claim 1, wherein said first gripping surface (3'), said second gripping surface (3"), said respective first gripping surface (4') and said respective second gripping surface (4") are able to promote the gripping of said linking element during the enlargement of said at least one split (7, 7').

8. Linking element for a modular jewel according to any one of the preceding claims, wherein said at least one further through-opening (10, 10') is distinct from said at least one first through-opening (6) and is delimited by at least one between said at least one first portion (3) and/or said at least one second portion (4) and/or at least one third portion (5) of said body (2).

9. Linking element for a modular jewel according to any one of the preceding claims, comprising at least one hole (10") provided for passing through at least one of said at least one first portion (3) and/or said at least one second portion (4) and/or said at least one said third portion (5).

10. Modular jewel comprising at least one linking element for a modular jewel according to any of claims 1 to 9.

11. Modular jewellery according to claim 10, comprising at least one flexible element (13) in the form of wire or chain or band engaged in at least one of said at least one first through-opening (6) and said at least one second through-opening (10, 10').

## Patentansprüche

1. Verbindungselement für ein modulares Schmuckstück, wobei das besagte Verbindungselement einen einzelnen und kontinuierlichen Körper (2) umfasst, der mindestens einen ersten Abschnitt (3), mindestens einen zweiten Abschnitt (4) und mindestens einen dritten Abschnitt (5) zum Verbinden des besagten mindestens einen ersten Abschnitts (3) und des besagten mindestens einen zweiten Abschnitts (4) aufweist, worin mindestens ein Teil des besagten mindestens einen ersten Abschnitts (3) in unmittelbarer Nähe zu mindestens einem Abschnitt des besagten mindestens einen zweiten Abschnitts (4) angeordnet ist, wobei der besagte mindestens eine erste Abschnitt (3), der besagte mindestens eine zweite Abschnitt (4) und der besagte mindestens eine dritte Abschnitt (5) untereinander mindestens eine erste Durchgangsöffnung (6) durch den besagten Körper (2) begrenzen, wobei der besagte mindestens eine erste Abschnitt (3) und der besagte mindestens eine zweite Abschnitt (4) an dem besagten Abschnitt, an dem sie sich in unmittelbarer Nähe zueinander befinden, durch mindestens einen Spalt (7, 7'), der die besagte mindestens eine erste Durchgangsöffnung (6) unterbricht, voneinander getrennt sind, wobei der besagte mindestens eine Spalt (7, 7') selektiv erweiterbar/schrumpfbar ist durch eine elastische Verformung mindestens eines zwischen dem besagten mindestens einen ersten Abschnitt (3) und/oder dem besagten mindestens einen zweiten Abschnitt (4) und/oder dem besagten mindestens einen dritten Abschnitt (5), um einen Zugangsdurchgang (8) zu der besagten Durchgangsöffnung (6) zu begrenzen/zu verschließen, wobei der besagte Körper (2) eine im Wesentlichen laminare Gestalt aufweist, sodass der besagte mindestens eine erste Abschnitt (3) eine erste Greifoberfläche (3') und eine zweite Greifoberfläche (3") aufweist, die einander gegenüberliegen, und der besagte mindestens eine zweite Abschnitt (4) eine jeweilige erste Greifoberfläche (4') und eine jeweilige zweite Greifoberfläche (4') aufweist, die mit einem Abstand, der der Dicke des besagten Körpers (2) entspricht, voneinander getrennt sind, **dadurch gekennzeichnet, dass** das besagte Verbindungselement mindestens einen weiteren Spalt (7') umfasst, der vorgesehen ist, um den Zugang zu mindestens einer weiteren Durchgangsöffnung (10) durch den besagten Körper (2) zu ermöglichen.

2. Verbindungselement für ein modulares Schmuckstück nach Anspruch 1, worin mindestens einer des besagten mindestens einen ersten Abschnitts (3) und/oder des besagten mindestens einen zweiten Abschnitts (4) und/oder des besagten mindestens einen dritten Abschnitts (5) aus einem elastischen Material hergestellt ist, das so beschaffen ist, das es die elastische Verformung des besagten Verbindungselements zwischen einer ersten Funktionskonfiguration zu ermöglicht, wobei sich der besagte mindestens eine erste Abschnitt (3) und der besagte mindestens eine zweite Abschnitt (4) in unmittelbarer gegenseitiger Nähe befinden, wodurch sie den besagten Zugangsdurchgang (8) verschließen und eine zweite Funktionskonfiguration, in der der besagte mindestens eine erste Abschnitt (3) und der besagte mindestens eine zweite Abschnitt (4) voneinander wegbewegt werden, wodurch sie den besagten Zugangsdurchgang (8) zwischen ihnen begrenzen.

3. Verbindungselement für ein modulares Schmuckstück nach Anspruch 2, worin das besagte Material mit elastischem Verhalten ein Metall und/oder eine Metalllegierung und/oder ein elastischer Kunststoff und/oder Holz ist oder beinhaltet.

4. Verbindungselement für ein modulares Schmuckstück nach Anspruch 1 oder 2, worin mindestens einer des besagten mindestens einen ersten Abschnitts (3) und des besagten mindestens einen zweiten Abschnitts (4) mindestens ein erstes Ende (9) mit einer Form aufweist, die zum Profil des anderen zwischen dem besagten mindestens einen zweiten Abschnitt (4) oder dem besagten mindestens einen ersten Abschnitt (3), an dem es vorsteht, komplementär ist, wobei das besagte Verbindungselement in der besagten ersten Funktionskonfiguration vorgesehen ist.

5. Verbindungselement für ein modulares Schmuckstück nach Anspruch 1, worin der besagte mindestens eine Spalt (7) eine reduzierte Größe zwischen 0,01 mm und etwa der Dicke des besagten Körpers (2) aufweist.

6. Verbindungselement für ein modulares Schmuckstück nach irgendeinem der vorangegangenen Ansprüche, worin der besagte mindestens eine erste Abschnitt (3) zu der gleichen Liegeebene des besagten mindestens einen zweiten Abschnitts (4) und/oder des besagten mindestens einen dritten Abschnitts (5) gehört.

7. Verbindungselement für ein modulares Schmuckstück nach Anspruch 1, worin die besagte erste Greifoberfläche (3'), die besagte zweite Greifoberfläche (3"), die besagte jeweilige erste Greifoberfläche (4') und die besagte jeweilige zweite Greifoberfläche (4") in der Lage sind, das Greifen des besagten Verbindungselements während der Erweiterung des besagten mindestens einen Spalts (7, 7') zu fördern.

8. Verbindungselement für ein modulares Schmuckstück nach irgendeinem der vorangegangenen Ansprüche, worin sich die besagte mindestens eine weitere Durchgangsöffnung (10, 10') von der besagten mindestens einen ersten Durchgangsöffnung (6) unterscheidet und durch mindestens einen zwischen dem besagten mindestens einen ersten Abschnitt (3) und/oder besagten mindestens einen zweiten Abschnitt (4) und/oder mindestens einen dritten Abschnitt (5) des besagten Körpers (2) begrenzt ist.

9. Verbindungselement für ein modulares Schmuckstück nach irgendeinem der vorangegangenen Ansprüche, umfassend mindestens ein Loch (10"), das zum Durchführen mindestens eines des besagten mindestens einen ersten Abschnitts (3) und/oder des besagten mindestens einen zweiten Abschnitts (4) und/oder des besagten mindestens einen dritten Abschnitts (5) vorgesehen ist.

10. Modulares Schmuckstück, umfassend mindestens ein Verbindungselement für ein modulares Schmuckstück nach einem der Ansprüche 1 bis 9.

11. Modularer Schmuck nach Anspruch 10, umfassend mindestens ein flexibles Element (13) in Draht- oder Ketten- oder Bandform, das in mindestens eine der besagten mindestens einen ersten Durchgangsöffnungen (6) und der besagten mindestens einen zweiten Durchgangsöffnung (10, 10') eingreift.

## Revendications

1. Élément de liaison pour un bijou modulaire, ledit élément de liaison comprenant un corps (2) unique et continu qui comporte au moins une première partie (3), au moins une deuxième partie (4) et au moins une troisième partie (5) pour raccorder ladite au moins une première partie (3) et ladite au moins une deuxième partie (4), dans lequel au moins une section de ladite au moins une première partie (3) est placée à proximité étroite d'au moins une partie de ladite au moins une deuxième partie (4), ladite au moins une première partie (3), ladite au moins une deuxième partie (4) et ladite au moins une troisième partie (5) délimitant entre elles au moins une première ouverture traversante (6) à travers ledit corps (2), ladite au moins une première partie (3) et ladite au moins une deuxième partie (4) sont séparées l'une de l'autre, au niveau de ladite partie où elles sont à proximité étroite l'une de l'autre, par au moins une fente (7, 7') croisant ladite au moins une première ouverture traversante (6), ladite au moins une fente (7, 7') pouvant être sélectivement étendue/rétrécie grâce à une déformation élastique d'au moins l'une entre ladite au moins une première partie (3) et/ou ladite au moins une deuxième partie (4) et/ou ladite au moins une troisième partie (5), pour délimiter/fermer un passage d'accès (8) vers ladite ouverture traversante (6), ledit corps (2) ayant une forme sensiblement laminaire de telle sorte que ladite au moins une première partie (3) comporte une première surface d'accrochage (3') et une deuxième surface d'accrochage (3"), opposées l'une à l'autre, et ladite au moins une deuxième partie (4) comporte une première surface d'accrochage (4') respective et une deuxième surface d'accrochage (4") respective séparées l'une de l'autre par une distance égale à l'épaisseur dudit corps (2), **caractérisé en ce que** ledit élément de liaison comprend au moins une fente (7') supplémentaire prévue pour permettre l'accès à au moins une ouverture traversante (10) supplémentaire à travers ledit corps (2) .

2. Élément de liaison pour un bijou modulaire selon la revendication 1, dans lequel au moins l'une de ladite au moins une première partie (3) et/ou ladite au moins une deuxième partie (4) et/ou ladite au moins une troisième partie (5) est constituée d'une matière élastique adaptée pour permettre la déformation élastique dudit élément de liaison entre une première configuration opérationnelle, dans laquelle ladite au moins une première partie (3) et ladite au moins une deuxième partie (4) sont à proximité réciproque étroite, fermant ledit passage d'accès (8) et une deuxième configuration opérationnelle dans laquelle ladite au moins une première partie (3) et ladite au moins une deuxième partie (4) sont éloignées l'une de l'autre, délimitant entre elles ledit passage d'accès (8) .

3. Élément de liaison pour un bijou modulaire selon la revendication 2, dans lequel ladite matière au comportement élastique est ou comprend un métal et/ou un alliage métallique et/ou un plastique élastique et/ou du bois.

4. Élément de liaison pour un bijou modulaire selon la revendication 1 ou 2, dans lequel au moins l'une de ladite au moins une première partie (3) et ladite au moins une deuxième partie (4) comporte au moins une première extrémité (9) de forme complémentaire au profil de l'autre entre ladite au moins une deuxième partie (4) ou ladite au moins une première partie (3) sur laquelle elle est saillante, ledit élément de liaison étant disposé dans ladite première configuration opérationnelle.

5. Élément de liaison pour un bijou modulaire selon la revendication 1, dans lequel ladite au moins une fente (7) présente une taille réduite, entre 0,01 mm et environ l'épaisseur dudit corps (2).

6. Élément de liaison pour un bijou modulaire selon l'une quelconque des revendications précédentes, dans lequel ladite au moins une première partie (3) appartient au même plan couché de ladite au moins une deuxième partie (4) et/ou de ladite au moins une troisième partie (5).

7. Élément de liaison pour un bijou modulaire selon la revendication 1, dans lequel ladite première surface d'accrochage (3'), ladite deuxième surface d'accrochage (3"), ladite première surface d'accrochage (4') respective et ladite deuxième surface d'accrochage (4") respective peuvent favoriser l'accrochage dudit élément de liaison pendant l'agrandissement de ladite au moins une fente (7, 7').

8. Élément de liaison pour un bijou modulaire selon l'une quelconque des revendications précédentes, dans lequel ladite au moins une ouverture traversante (10, 10') supplémentaire est distincte de ladite au moins une première ouverture traversante (6) et est délimitée par au moins l'une entre ladite au moins une première partie (3) et/ou ladite au moins une deuxième partie (4) et ou au moins une troisième partie (5) dudit corps (2) .

9. Élément de liaison pour un bijou modulaire selon l'une quelconque des revendications précédentes, comprenant au moins un orifice (10") prévu pour traverser au moins l'une de ladite au moins une première partie (3) et/ou ladite au moins une deuxième partie (4) et/ou ladite au moins une troisième partie (5) .

10. Bijou modulaire comprenant au moins un élément de liaison pour un bijou modulaire selon l'une quelconque des revendications 1 à 9.

11. Bijou modulaire selon la revendication 10, comprenant au moins un élément flexible (13) sous la forme de fil ou de chaîne ou de bande engagé dans au moins l'une de ladite au moins une première ouverture traversante (6) et ladite au moins une deuxième ouverture traversante (10, 10').
